# EUROPEAN PATENT SPECIFICATION

(11) **EP 0 475 985 B1**
(45) Date of publication and mention of the grant of the patent: **01.09.1993**
(21) Application number: 90908534.2
(22) Date of filing: 06.06.1990
(51) Int. Cl.: D21D 5/24, B04C 9/00

(54) **METHOD OF AND APPARATUS FOR SEPARATING HEAVY IMPURITIES FROM FIBER SUSPENSIONS IN CONNECTION WITH PUMPING**
VERFAHREN UND VORRICHTUNG ZUM ABSCHEIDEN SCHWERER VERUNREINIGUNGEN AUS FASERAUFSCHWEMMUNGEN WÄHREND DES PUMPENS
PROCEDE ET APPAREIL DE SEPARATION D'IMPURETES LOURDES DE SUSPENSIONS DE FIBRES LORS DU POMPAGE

(30) Priority: 08.06.1989 FI 892807
(43) Date of publication of application: 25.03.1992
(73) Proprietor: A. AHLSTROM CORPORATION, SF-29600 Karhula (FI)
(72) Inventor: HENRICSON, Kaj, SF-48100 Kotka (FI); PITKÄNEN, Raimo, SF-48800 Karhula (FI); VIKIÖ, Pentti, SF-58200 Kerimäki (FI)
(74) Representative: Füchsle, Klaus, Dipl.-Ing.
(86) International application number: PCT/FI90/00154
(87) International publication number: WO 90/15183

(56) References cited:
- EP-A- 0 306 022
- FI-C- 32 129
- SE-A- 8 602 816
- SE-B- 457 614

## Description

### BACKGROUND OF THE INVENTION

The present invention relates to a method of and an apparatus for separating heavy impurities from fiber suspensions in a centrifugal pump. The method and the apparatus of the invention are particularly suitable for treatment of fiber suspensions in the wood processing industry. The stock treated in the pulp and paper industry frequently contains heavy impurities, for example pieces of metal or sand. Sand is often transported to the mill with the raw material, i.e. wood or waste paper. Metal may come off from various treatment devices of the mill itself or it may arrive with the raw material. Metal scrap comes into paper mills with waste paper e.g. as staples or paper clips.

The common feature of all heavy and hard objects of this kind is that they are very detrimental to the process and they have to be removed. Sand and metal cause trouble by wearing out the process devices and by collecting in the devices and clogging them.

Heavy particles are usually separated from the stock by various vortex separators which have been developed different for different applications. We will discuss here, by way of example, two types of them.

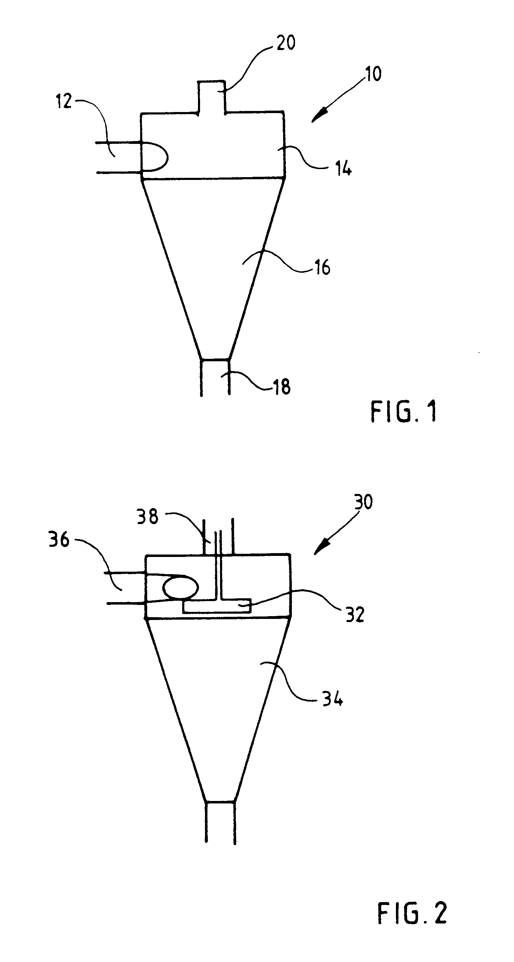

A conventional low consistency cleaner usually operates at a consistency range of less than 1 % and is a vortex separator similar to the one indicated in Fig. 1 by reference numeral 10. Stock is introduced at a high speed via a tangential connection 12 into the cylindrical portion 14 of the separator where heavy particles are collected at the walls and run along a spiral path down to a conical portion 16 of the separator from the bottom of which they are rejected via a connection 18. The purified lighter stock is collected around the axis of the separator 10, rises up and is discharged via a connection 20 in the upper end of the separator 10. This kind of a vortex separator is a good and an efficient purifier as such but it has two disadvantages, namely low operation consistency and high energy consumption. The energy consumption is high as, due to the low operation consistency, a large amount of water must be pumped through the vortex cleaner and the pressure loss in the apparatus is great.

Another apparatus generally used for separating scrap and sand is a high consistency cleaner. The high consistency cleaner 30 illustrated in Fig. 2. is in other respects identical with a conventional vortex cleaner but it is provided with a rotor 32. The rotor usually rotates at the upper end of a conical portion 34 of the cleaner 30 close to a feed connection 36 and an accept discharge 38. The rotor 32 has two functions. One of them is to increase the movement speed of the high consistency stock and thus the turbulence in the suspension to a level at which the scrap and the sand can move in relation to the fibers, i.e. the scrap and the sand are not bound by the fibers and fiber flocs. If the turbulence level is too low the fiber network renders the suspension semi-solid whereby the scrap and sand particles cannot easily move in the suspension. The second function of the rotor 32 is to subject the stock suspension to a fast circular movement and thus to create a centrifugal force forcing the heavy particles to the periphery of the separator. This kind of a cleaner is applicable at a consistency range of 3 to 5%. The drawbacks of the cleaner are its large size and high energy consumption when adequate separation efficiency it strived for. Further, the cleaner, despite its rotor, is not capable of creating pressure, in other words it cannot pass the material further on but the material to be cleaned must be supplied to the apparatus at such a high pressure that the material is also subsequently discharged from the apparatus.

In SE-B-457 614, there is disclosed a turbocyclone apparatus, in which the suspension is fed through a tangential feed connection. The suspension flows underneath a stationary spirally formed plate, which directs the suspension to a spiral path down along the converging walls of the cyclone. Thereafter the pulp is subjected to axial forces by means of a rotating rotor for increasing the separation efficiency. The light particles accumulate in the center of the cyclone and flow upwards along a channel within the hollow shaft of the rotor, whereas the heavier particles are removed from the bottom portion of the cyclone. The shaft has openings in its upper portion so that the light particles are able to flow therethrough into the tangential outlet of the cyclone.

### OBJECT OF THE INVENTION

The object of the present invention is to overcome or minimize the problems of the prior art apparatus in separating sand and scrap from the stock. The apparatus of the present invention is small and its energy consumption is low.

### SUMMARY OF THE INVENTION

The method of the invention is characterized e.g. in that the rotary movement of the fiber suspension created by a pump is utilized in the separation of heavy impurities from the suspension to be pumped which impurities move to the periphery of the rotary flow wherefrom they are removed from the pump as a flow separate from the rest of the suspension.

The apparatus of the invention is characterized in that the pump housing has at least one discharge opening for removal of the heavy impurities collected to the wall of the housing.

The invention is now described in more detail by way of example, with reference to the accompanying drawings, of which:

### BRIEF DESCRIPTION OF THE DRAWINGS

Fig. 1 schematically illustrates a prior art vortex separator used at low consistencies;
Fig. 2 schematically illustrates a prior art vortex separator used at higher consistencies;
Fig. 3 is a schematic section transverse to the rotary axis of a preferred embodiment of an apparatus according to the invention; and
Fig. 4 is a schematic section parallel to the rotary axis of another preferred embodiment of an apparatus according to the invention.

### DESCRIPTION OF THE PREFERRED EMBODIMENTS

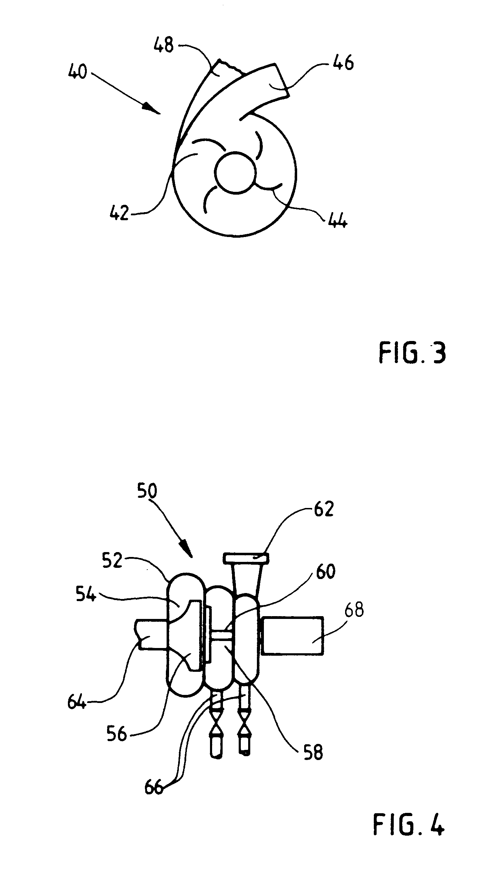

Fig. 3 schematically illustrates a centrifugal pump 40 having a pump housing 42, an impeller 44, stock discharge connection or pressure outlet 46, and a discharge connection 48 for heavy particles. The impeller 44, while it rotates at a high speed in the pump housing 42, subjects the stock to be pumped to a high-speed rotary movement. The rotary movement, and the centrifugal force it creates, causes the heavy particles to drift to the outer periphery of the inside of pump housing 42. By designing the housing so as to cause the heavy particles to be collected and flow to the discharge connection 48, the required separation is achieved and there is no need to separately create a centrifugal force field in a separate apparatus for the separation. Thus both the separation of the heavy particles and the subjection of the stock to pressure, i.e. the increase of pressure for the transfer of the stock, can be carried out in one and the same apparatus. The pump illustrated in Fig. 3 can be used in many partial processes of the pulp and paper industry.

Fig. 4 illustrates another preferred embodiment of a centrifugal pump 50 according to the invention in which a pump housing 52 has a first portion 54 inside which an impeller 56 is disposed, and a second portion 58 inside which the sealing and the bearings of the pump shaft 60 are provided. The shape of the first portion 54 of the housing 52 is substantially identical with the shape of a conventional centrifugal pump housing with the exception that the said housing portion 54 has no pressure outlet of the pump but the first portion 54 of the housing 52 continues either as a volute or a curving spiral or as successive annular zones to form the second portion 58 of the housing 52 and ends at a tangential pressure outlet 62 of the pump. The first portion 54 of the pump housing 52 is, as is conventional, provided with an inlet or a suction opening/connection 64. It is a characteristic feature of the portions 54 and 58 of the pump housing 52 that their cross-sectional flow area slightly deminishes towards the pressure outlet 62 so as to accelerate the rotating velocity in the spiral of the material to be cleaned/pumped. This improves the separation efficiency of the pump and the pressure of the stock is substantially unchanged even though heavy material is removed via discharge outlets 66 provided in the spiral. The deminishing of the cross-sectional flow area described above can be carried out either as illustrated in Fig. 4, whereby the sealing and the bearings of the pump are enclosed in a substantially cylindrical casing and the diameter of the spiral reduces towards the pressure outlet, or by arranging the casing, which is conical and encloses the said bearings and the sealing, to open towards the pump drive motor 68 in which case the diameter of the pump spiral can be unchanged along its whole length.

The embodiment illustrated in Fig. 4 can of course be substituted by an inverted solution wherein the helical housing of the pump is arranged around the suction opening of the pump. In this case, the suction opening can be left cylindrical, if necessary, or it can be conical as described above. There are good grounds for this kind of an arrangement as maintenance of the pump bearings and the sealings and control of the operation is remarkably easier in a pump in which the bearings and the sealings are easily at hand and not inside the spiral housing of the pump.

An alternative embodiment of the invention is also a solution in which the spirally projecting housing is replaced by several annular housing portions whereby the heavy particles circulating at the wall of the housing cannot travel from the impeller towards the pressure outlet opening but remain circulating in the said annular portions from which they are easy to discharge.

In order to remove the heavy particles the spiral or the annular portions of the housing are provided with discharge openings/connections via which the stock portion containing heavy particles is removed from the main flow and guided to another corresponding separator or for example to a prior art cyclone. Then the accept from the said secondary separation device can be recycled either to the inlet of the primary stage separator or, if the discharge pressure of the secondary stage is adequate, directly to the accept flow of the primary stage. By arranging the discharge appropriately either to an adequate counter-pressure or via an adequately narrow opening it can be guaranteed that the pressure generated by the pump cannot significantly "leak" through this discharge opening.

In the following, a few examples are described.

In the pulping of waste paper, sand and metal arrive in the pulper with the paper. After the pulping, the stock is usually pumped to a following process step. When the method of the invention of separating said and scrap is applied to this pumping stage the problems which otherwise would be present in the pumping to the following process step are avoided.

A second application example is the feeding of stock by a pump to a screen. In the screen, there is a rotor rotating close to the screen surface and both the rotor and the screen surface would be heavily worn if sand and metal scrap were to come into the screen. By separating the sand and the scrap in the feed pump of the screen the wearing can be reduced.

A third application example is the feeding of stock to a refiner. In a refiner, the stock is treated between two rotating metal blade surfaces. The gap between the blades is often very small, even less than 1 mm. It is obvious that separation of scrap and sand in the feed pump of the refiner reduces wearing of the refiner blades.

A fourth example is the feeding of stock to a stock washer, a store tank or any other space in which the flow rate is low. In this kind of spaces, the heavy particles tend to be settled to the bottom and thus gradually clogg the device. By separating the heavy particles in the feeding pump the problems can be reduced.

A feature common to all the above examples is that the stock feed pump is used in an attempt to eliminate or reduce the problems caused by heavy particles in the apparatus. In addition to these examples, more applications are to be found in the pulp and paper industry.

As can be comprehended from the above, the method and the apparatus of the invention makes possible the elimination or minimization of the disadvantages of a variety of prior art systems and thus stock treatment systems have become simpler and the life of the apparatus required by the systems remarkably longer.

## Claims

1. A method of separating heavy impurities from fiber suspensions in connection with pumping, according to which method the fiber suspension is supplied to a centrifugal pump, the pressure of the fiber suspension in the pump is raised and the fiber suspension is discharged from the pump at a pressure higher than the supply pressure, **characterized** in that the rotary movement of the fiber suspension created by the pump is utilized in separation of heavy impurities from the suspension to be pumped to the outer periphery of the rotary flow from which the heavy impurities are removed from the pump as a flow separate from the rest of the suspension.

2. A method as claimed in claim 1, **characterized** in that the material to be pumped is circulated in the pump housing for at least one cycle.

3. A method as claimed in claim 2, **characterized** in that the suspension to be pumped is circulated in the pump housing for at least two cycles.

4. A method as claimed in claim 1, **characterized** in that the fiber suspension is supplied from a pulper to a centrifugal pump from which fibre suspension the sand and other heavy impurities which flow in with the suspension are separated by centrifugal force to the wall of the pump volute wherefrom said impurities are discharged at the same time as the pressure of the suspension is raised for transferring the suspension to a following process step.

5. A method as claimed in claim 1, **characterized** in that heavy impurities are separated to the spiral wall of the pump from the suspension supplied to the pump, which impurities are discharged from the pump at the same time as the pump is used to raise the pressure of the suspension in order to supply the suspension to a screen.

6. A method as claimed in claim 1, **characterized** in that heavy impurities are separated to the spiral wall of the pump from the suspension supplied to the pump, which impurities are discharged from the pump at the same time as the pump is used to raise the pressure of the suspension in order to supply the suspension to a refiner.

7. A method as claimed in claim 1, **characterized** in that heavy impurities are separated to the spiral wall of the pump from the suspension supplied to the pump, which impurities are discharged from the pump at the same time as the pump is used to raise the pressure of the suspension in order to supply the suspension to a stock washer, a stock tank or a corresponding space in which the heavy particles would be settled to the bottom and would encumber the discharge of the tank or a corresponding device.

8. An apparatus for separating heavy impurities from fiber suspensions in connection with pumping, the apparatus comprising a pump housing having a suction inlet opening and pressure outlet opening, an impeller rotatably disposed in the housing, an impeller shaft having bearings and sealing, and a drive means for the shaft, **characterized** in that the housing (42, 52) of the pump (40, 50) is provided with at least one discharge opening (48, 66) for the discharge from the pump of the heavy impurities collecting at the wall of the housing.

9. An apparatus as claimed in claim 8, **characterized** in that the housing (52) of the pump (50) comprises a volute (54, 58) connecting its suction opening (64) and discharge opening (62), the volute being arranged to wind around the pump shaft (60) at least for one whole cycle.

10. An apparatus as claimed in claim 8, **characterized** in that the housing (52) of the pump (50) comprises several adjacent annular housing portions (54, 58) connecting its suction opening (64) and its discharge opening (62).

## Patentansprüche

1. Verfahren zur Abscheidung von schweren Verunreinigungen aus Fasersuspensionen in Zusammenhang mit Pumpen, welchem Verfahren zufolge die Fasersuspension einer Kreiselpumpe zugeführt, der Druck der Fasersuspension in der Pumpe angehoben und die Fasersuspension aus der Pumpe bei einem Druck entfernt wird, der höher ist als der Eingabedruck, dadurch gekennzeichnet, daß die durch die Pumpe erzeugte Drehbewegung der Fasersuspension dazu benutzt wird, schwere Verunreinigungen aus der zu pumpenden Suspension zum Außenumfang der umlaufenden Strömung abzuscheiden, von wo die schweren Verunreinigung als eine von der restlichen Suspension getrennte Strömung aus der Pumpe ausgetragen werden.

2. Verfahren gemäß Anspruch 1, dadurch gekennzeichnet, daß das zu pumpende Material mindestens einen Umdrehung lang im Pumpengehäuse zirkuliert wird.

3. Verfahren gemäß Anspruch 2, dadurch gekennzeichnet, daß die zu pumpende Suspension mindestens zwei Umdrehungen lang im Pumpengehäuse zirkuliert wird.

4. Verfahren gemäß Anspruch 1, dadurch gekennzeichnet, daß die Fasersuspension von einem Pulper einer Kreiselpumpe zugeführt wird, aus welcher Suspension der mit der Suspension hineineinfließende Sand und andere schwere Verunreinigung durch die Fliehkraft an die Wand des Spiralgehäuses der Pumpe abgeschieden werden, von wo die genannten Verunreinigungen gleichzeitig ausgetragen werden, wenn der Druck der Suspension zur Beförderung der Suspension in eine folgende Prozeßstufe angehoben wird.

5. Verfahren gemäß Anspruch 1, dadurch gekennzeichnet, daß schwere Verunreinigungen aus der der Pumpe zugeführten Suspension an die Wand des Spiralgehäuses der Pumpe abgeschieden werden, welche Verunreinigungen gleichzeitig aus der Pumpe abgeschieden werden, wenn die Pumpe zur Druckerhöhung der Suspension benutzt wird, um die Suspension einer Klassiervorrichtung zuzuführen.

6. Verfahren gemäß Anspruch 1, dadurch gekennzeichnet, daß schwere Verunreinigung aus der der Pumpe zugeführten Suspension an die Wand des Spiralgehäuses der Pumpe abgeschieden werden, welche Verunreinigungen gleichzeitig aus der Pumpe abgeschieden werden, wenn die Pumpe zur Erhöhung des Druckes der Suspension benutzt wird, um die Suspension einem Refiner zuzuführen.

7. Verfahren gemäß Anspruch 1, dadurch gekennzeichnet, daß schwere Verunreinigungen aus der der Pumpe zugeführten Suspension an die Wand des Spiralgehäuses der Pumpe abgeschieden werden, welche Verunreinigungen gleichzeitig aus der Pumpe abgeschieden werden, wenn die Pumpe zur Druckerhöhung der Suspension benutzt wird, um die Suspension einem Stoffwäscher, einem Stoffbehälter oder einem entsprechenden Raum zuzuführen, wo sich die schweren Partikeln auf den Boden absetzen und die Entleerung des Behälters oder einer entsprechenden Vorrichtung verhindern würden.

8. Vorrichtung zur Abscheidung von schweren Verunreinigungen aus Fasersuspensionen in Verbindung mit Pumpen, welche Vorrichtung ein Pumpengehäuse mit einer Saugöffnung und einer Drucköffnung, ein innerhalb des Gehäuses drehbar angeordnetes Laufrad, eine Laufradwelle mit Lagern und Dichtung, und einen Antrieb für die Welle umfaßt, dadurch gekennzeichnet, daß das Gehäuse (42, 52) der Pumpe (40, 50) mit mindestens einer Auslaßöffnung (48, 66) zur Austragung der schweren sich an der Gehäusewand ansammelnden Verunreinigungen aus der Pumpe vorgesehen ist.

9. Vorrichtung gemäß Anspruch 8, dadurch gekennzeichnet, daß das Gehäuse (52) der Pumpe (50) eine Spirale (54, 58) umfaßt, die ihre Saugöffnung (64) mit der Drucköffnung (62) verbindet, welche Spirale so angeordnet ist, daß sie sich mindestens um eine volle Umdrehung um die Pumpenwelle (60) herum windet.

10. Vorrichtung gemäß Anspruch 8, dadurch gekennzeichnet, daß das Gehäuse (52) der Pumpe (50) aus mehreren nebeneinander angeordneten ringförmigen Gehäuseabschnitten (54, 58) besteht, die die Saugöffnung (64) der Pumpe mit ihrer Drucköffnung (62) verbinden.

## Revendications

1. Procédé de séparation des impuretés lourdes des suspensions de fibres en liaison avec le pompage, procédé suivant lequel la suspension de fibres est fournie à une pompe centrifuge, la pression de la suspension de fibre dans la pompe est élevée et la suspension de fibres est évacuée de la pompe à une pression plus élevée que la pression d'alimentation, caractérisé en ce que le mouvement rotatif de la suspension de fibres créé par la pompe est utilisé dans la séparation des impuretés lourdes de la suspension à pomper à la périphérie extérieure du courant rotatif à partir duquel les impuretés lourdes sont retirées de la pompe comme un courant séparé du reste de la suspension.

2. Procédé selon la revendication 1, caractérisé en ce que le matériau à pomper circule dans l'enceinte de la pompe pendant au moins un cycle.

3. Procédé selon la revendication 2, caractérisé en ce que la suspension à pomper circule dans l'enceinte de la pompe pendant au moins deux cycles.

4. Procédé selon la revendication 1, caractérisé en ce que la suspension de fibres est fournie depuis un triturateur à une pompe centrifuge, suspension de fibres à partir de laquelle le sable et les autres impuretés lourdes qui circulent avec la suspension sont séparés par force centrifuge vers la paroi de la volute de la pompe à partir d'où lesdites impuretés sont évacuées en même temps que la pression de la suspension est élevée pour transférer la suspension vers une étape suivante du processus.

5. Procédé selon la revendication 1, caractérisé en ce que les impuretés lourdes sont séparées sur la paroi en spirale de la pompe de la suspension fournie à la pompe, lesquelles impuretés sont déchargées de la pompe en même temps que la pompe est utilisée pour élever la pression de la suspension afin de fournir la suspension à un tamis.

6. Procédé selon la revendication 1, caractérisé en ce que les impuretés lourdes sont séparées sur la paroi en spirale de la pompe de la suspension fournie à la pompe, lesquelles impuretés sont évacuées de la pompe au moment même où la pompe est utilisée pour élever la pression de la suspension afin de fournir la suspension à un raffineur.

7. Procédé selon la revendication 1, caractérisé en ce que les impuretés lourdes sont séparées sur la paroi en spirale de la pompe de la suspension fournie à la pompe, lesquelles impuretés sont évacuées de la pompe en même temps que la pompe est utilisée pour augmenter la pression de la suspension afin de fournir la suspension à un dispositif de lavage de pâte, à un réservoir de pâte ou à un espace correspondant dans lequel les particules lourdes se fixeront au fond et encombreront l'évacuation du réservoir ou d'un dispositif correspondant.

8. Dispositif pour séparer les impuretés lourdes des suspensions de fibres en relation avec le pompage, le dispositif comprenant une enceinte de pompe comportant une ouverture d'orifice d'aspiration et une ouverture de sortie de pression, une hélice étant disposée de façon à tourner dans l'enceinte, un arbre d'hélice comportant des supports et un joint d'étanchéité, et des moyens d'entrainement pour l'arbre, caractérisé en ce que l'enceinte (42, 52) de la pompe (40, 50) est munie d'au moins une ouverture d'évacuation (48, 66) pour l'évacuation de la pompe des impuretés lourdes recueillies au niveau de la paroi de l'enceinte.

9. Dispositif selon la revendication 8, caractérisé en ce que l'enceinte (52) de la pompe (50) comprend une volute (54, 58) reliant son ouverture d'aspiration (64) et son ouverture d'évacuation (62), la volute étant disposée pour s'enrouler autour de l'arbre de la pompe (60) au moins pendant un cycle complet.

10. Dispositif selon la revendication 8, caractérisé en ce que l'enceinte (52) de la pompe (50) comporte plusieurs parties adjacentes annulaires de logement (54, 58) reliant son ouverture d'aspiration (64) et son ouverture d'évacuation (62).
